# EUROPÄISCHE PATENTSCHRIFT

(11) **EP 0 857 910 B1**
(45) Veröffentlichungstag und Bekanntmachung des Hinweises auf die Patenterteilung: **09.07.2003**
(21) Anmeldenummer: 98101681.9
(22) Anmeldetag: 31.01.1998
(51) Int. Cl.: F16N 13/02, F04B 53/06

(54) **Schmierfett-Zuführeinrichtung für Baumaschinen, insbesondere hydraulisch betriebene Schlagwerke und Abbruchzangen**
Grease feed device for working machine, specially fluid powered percussion mechanism and breaking tools
Dispositif d'alimentation en graisse pour des appareils de construction en particulier des outils de percussion entrainés hydrauliquement ou des outils de concassage

(30) Priorität: 10.02.1997 DE 19704958
(43) Veröffentlichungstag der Anmeldung: 12.08.1998
(73) Patentinhaber: Atlas Copco Construction Tools GmbH, 45143 Essen (DE)
(72) Erfinder: Prokop, Heinz-Jürgen, Dr.-Ing., 45149 Essen (DE); Deimel, Thomas, 45329 Essen (DE); Zumbach, Ferdinand, 42781 Haan (DE)
(74) Vertreter: Vomberg, Friedhelm, Dipl.-Phys.

(56) Entgegenhaltungen:
- EP-A- 0 288 981
- DE-A- 2 319 249
- DE-A- 3 512 020
- DE-C- 866 746
- US-A- 5 060 761

## Beschreibung

Die Erfindung betrifft eine Schmierfett-Zuführeinrichtung für Baumaschinen, insbesondere hydraulisch betriebene Schlagwerke und Abbruchzangen, mit einer an einen Schmierfett-Vorratsbehälter angeschlossenen Fördereinheit. Diese weist in einem Hohlraum einen geradlinig hin und her bewegten Förderkolben, eine in den Hohlraum einmündende und mit dem Schmierfett-Vorratsbehälter verbundene Zuführleitung, eine in den Hohlraum einmündende Förderleitung mit einem nachgiebig in der Schließstellung gehaltenen Sperrelement und einen Verstellanschlag auf, welcher den Hub des Förderkolbens in Richtung seiner Förderbewegung begrenzt. Die Einmündung der Zuführleitung in den Hohlraum ist dabei - in Richtung der Förderbewegung gesehen - vor derjenigen der Förderleitung angeordnet und kann zumindest zeitweilig gegen den Hohlraum abgesperrt werden, falls sich der Förderkolben in Förderrichtung über sie hinaus verschiebt.

Baumaschinen, wie insbesondere die zuvor angesprochenen Zerkleinerungs- und Abbruchgeräte, weisen vielfach hochbelastete Führungs- und Lagerelemente auf, für deren Schmierung sich die Verwendung von Schmierfetten mit hohem oder sehr hohem Feststoffgehalt als zweckmäßig erwiesen hat.
In der Druckschrift EP-B1-0430024 ist eine Einrichtung der eingangs erwähnten Gattung beschrieben, mittels welcher der Meißel eines hydraulischen Schlagwerks automatisch geschmiert wird.
Die bekannte Einrichtung weist einen Vorratsbehälter auf, dessen Inhalt unter Einwirkung einer vorgespannten Druckfeder der Fördereinheit zugeführt wird. Diese ist zur Beseitigung etwa vorhandener Lufteinschlüsse mit einem besonderen Entlüftungsventil und im Bereich ihrer Förderleitung mit einem Rückschlagventil ausgestattet; letzteres bewirkt, daß die an den Hohlraum (Förderraum) der Fördereinheit angeschlossene Förderleitung lediglich in einer Richtung durchflossen werden kann.
Zur Sicherstellung ihrer einwandfreien Funktion muß die Fördereinheit nach jedem Wechsel des Vorratsbehälters mittels des Entlüfungsventils von dem dabei eingedrungenen Gas befreit werden; andernfalls besteht die Gefahr, daß die Fördereinheit über einen längeren Zeitraum kein Schmierfett transportiert.

Aus der Veröffentlichung DE-B2-2319249 ist eine Schmierfett-Zuführeinrichtung für Schmieranlagen mit einer an einem Schmierfett-Vorratsbehälter angeschlossenen Fördereinheit bekannt, die in einem Hohlraum einen geradlinig hin und her bewegten Förderkolben, eine in den Hohlraum einmündende und mit dem Schmierfett-Vorratsbehälter verbundene Zuführleitung und eine in den Hohlraum einmündende Förderleitung mit einem nachgiebig in der Schließstellung gehaltenen Sperrelement aufweist; die Einmündung der Zuführleitung in den Hohlraum ist - in Richtung der Förderbewegung gesehen - vor derjenigen der Förderleitung angeordnet und zumindest zeitweilig gegen den Hohlraum abgesperrt, falls sich der Förderkolben in Förderrichtung über sie hinaus verschiebt. Der Hohlraum weist - in Richtung der Förderbewegung gesehen - hinter der Einmündung der Zuführleitung in ihn einen Verdichtungsabschnitt und daran anschließend einen Förderabschnitt auf. Über eine Zusatzeinrichtung kann bei Vorliegen eines ausreichend hohen Druckniveaus im Verdichtungsabschnitt eine ansonsten blockierte Rückführ-Verbindung zwischen dem Verdichtungsabschnitt und dem Schmiermittel-Vorratsbehälter hergestellt werden, solange sich der Kopf des Förderkolbens bei seiner Bewegung in Förderrichtung in dem Verdichtungsabschnitt befindet.

Bei der bekannten Zuführeinrichtung ist der Hub des Förderkolbens in Förderrichtung kleiner ausgelegt als der in das Sperrelement übergehende förderseitige Endabschnitt des Hohlraums; im übrigen liegt der Öffnungsdruck des Sperrelements über dem Verdichtungsdruck der eventuell im Hohlraum eingeschlossenen Luft. Diese Ausgestaltung hat zur Folge, daß die bekannte Zuführeinrichtung für die Verdrängung der im Hohlraum befindlichen Luft mehrere aufeinanderfolgende Kolbenhübe benötigt.

Der Erfindung liegt die Aufgabe zugrunde, eine Schmierfett-Zuführeinrichtung zu entwickeln, die als Ansaug- und Pumpeinheit arbeitet und in der Lage ist, beim Befüllen oder beim Wechsel des Schmierfett-Vorratsbehälters entstandene Lufteinschlüsse in verhältnismäßig kurzer Zeit selbsttätig zu beseitigen mit der Folge, daß eine kontinuierliche Versorgung der nachgeschalteten Schmierstellen mit Schmierfett gewährleistet ist.
Der Erfindungsgegenstand soll außerdem so ausgestaltet sein, daß die im wesentlichen aus dem Schmierfett-Vorratsbehälter und der Fördereinheit bestehende Zuführeinrichtung verhältnismäßig kleine Abmessungen aufweist und dementsprechend erforderlichenfalls in der Nähe der zu versorgenden Schmierstellen angeordnet werden kann.
Weiterhin soll es ggf. möglich sein, die Fördereinheit mit dem Fluid anzutreiben, welches ohnehin als Druckmittel für den Betrieb der zu schmierenden Baumaschine zur Verfügung steht.

Die Aufgabe wird durch eine Schmierfett-Zuführeinrichtung mit den Merkmalen des Anspruchs 1 gelöst.
Danach ist die gattungsgemäße Einrichtung derart weiter ausgestaltet, daß der in der Fördereinheit gebildete Hohlraum - in Richtung der Förderbewegung des Förderkolbens gesehen - hinter der Einmündung der Zuführleitung in ihn einen Verdichtungsabschnitt und daran anschließend einen Förderabschnitt aufweist. In dem Verdichtungsabschnitt wird nach dem Verschließen der Zuführleitung ein etwa angesaugtes kompressibles Medium (normalerweise Luft) bis auf das Volumen des Förderabschnitts verdichtet und anschließend - entgegen der Wirkung eines nachgiebig in der Schließstellung gehaltenen Sperrelements - in die Förderleitung gedrückt.

Über eine Zusatz-Einrichtung wird - ausgelöst durch ein nur bei Schmierfett-Förderung vorhandenes, ausreichend hohes Druckniveau im Verdichtungsabschnitt - eine ansonsten blockierte Rückführ-Verbindung zwischen dem Verdichtungsabschnitt und der Zuführleitung hergestellt, solange sich der Kopf des Förderkolbens bei seiner Bewegung in Förderrichtung in dem Verdichtungsabschnitt befindet. Falls also im Hohlraum der Fördereinheit kein kompressibles Medium vorhanden ist, bildet sich bereits im Verdichtungsabschnitt ein hohes Druckniveau aus mit der Folge, daß ein Teil des inkompressiblen Schmierfetts in die Zuführleitung zurückgeführt und lediglich der im Förderabschnitt befindliche Schmierfett-Anteil in die Förderleitung weitertransportiert wird.
Die Schließkraft des mit der Förderleitung zusammenwirkenden Sperrelements ist dabei derart eingestellt, daß das Sperrelement frühestens dann öffnet, wenn der Kopf des Förderkolbens den Förderabschnitt erreicht und gegen den Verdichtungsabschnitt abgesperrt hat. Dementsprechend kann im Höchstfall die Menge des zwischen dem Förderkolben-Kopf und dem Verstellanschlag im Förderabschnitt eingeschlossenen Mediums in Richtung auf die Förderleitung ausgeschoben werden, nachdem das bereits erwähnte Sperrelement in seine Öffnungsstellung überführt worden ist.
Der Verdichtungsabschnitt innerhalb des Hohlraums ist also dadurch definiert, daß lediglich bei Schmierfett-Förderung eine Rückförderung in Richtung der Zuführleitung ausgelöst wird, so daß nur das im Förderabschnitt eingeschlossene Volumen die von der Fördereinheit pro Förderhub im Höchstfall zu liefernde Fördermenge darstellt.
Die Mindestlänge des Verdichtungsabschnitts in Richtung der Förderbewegung des Förderkolbens entspricht im Normalfall der Längserstreckung der Zuführleitungs-Einmündung in den Hohlraum. Durch besondere konstruktive Maßnahmen kann die Lage des Verdichtungsabschnitts bezüglich der erwähnten Einmündung ebenso wie seine Länge beeinflußt werden.

Unter dem Gesichtspunkt, daß der Förderabschnitt nach Erreichen der förderseitigen Endlage des Förderkolbens ein möglichst kleines Restvolumen aufweisen sollte, kann die Einmündung der Förderleitung in den Förderabschnitt in dem Verstellanschlag angeordnet sein (Anspruch 2). Im einfachsten Fall weist dabei der Verstellanschlag eine zentrische Bohrung auf, die an seiner den Förderabschnitt begrenzenden Stirnfläche endet.

Vorzugsweise ist das Sperrelement derart ausgebildet und angeordnet, daß es in der Schließstellung einen Teil der Stirnfläche des Verstellanschlags bildet, welche den Förderabschnitt begrenzt (Anspruch 3).

Im einfachsten Fall ist die am Sperrelement angreifende Rückstellkraft derart eingestellt, daß es nach Eintritt des Förderkolbens in den Förderabschnitt mittelbar über diesen (das heißt: über das vor dem Förderkolben eingeschlossene Schmierfett oder Gaspolster) in die Öffnungsstellung überführt wird und somit die Eintrittsöffnung der Förderleitung freigibt, sobald sich im Förderabschnitt ein ausreichend hohes Druckniveau ausgebildet hat.

Der Erfindungsgegenstand kann jedoch auch so ausgestaltet sein, daß das Sperrelement mechanisch geöffnet wird, sobald der Förderkolben-Kopf bei seiner Bewegung in Förderrichtung sich im Förderabschnitt in der Nähe des Verstellanschlags befindet (Anspruch 4).Unter "Nähe" ist in diesem Zusammenhang ein Abstand zum Verstellanschlag zu verstehen, der im Höchstfall einem Drittel der Längserstreckung des Förderabschnitts entspricht, d. h. gleich oder kleiner ist als der dritte Teil der axialen Längserstreckung des Förderabschnitts.
Der hier angesprochene mechanisch wirkende Öffnungsmechanismus ließe sich insbesondere dadurch verwirklichen, daß entweder der Förderkolben auf seiner dem Sperrelement zugewandten Seite und/oder das Sperrelement auf seiner dem Förderkolben zugewandten Seite einen Vorsprung aufweist, der im Laufe der Förderbewegung des Förderkolbens an dem jeweils anderen Teil (Sperrelement bzw. Förderkolben) zur Anlage kommt und dabei das Sperrelement entgegen seiner Rückstellung in Förderrichtung verschiebt.
Soweit das Sperrelement betroffen ist, kann dieses im einfachsten Fall zur Auslösung der mechanischen Verstellung derart ausgebildet sein, daß es in seiner Schließstellung entgegen der Förderrichtung über den Verstellanschlag hinaus in den Förderabschnitt hineinragt. Dementsprechend würde der Förderkolben im Laufe seiner Förderbewegung mit dem vorkragenden Sperrelement in Kontakt kommen und dieses in seine Öffnungsstellung verschieben, bevor der Förderkolben schließlich den Verstellanschlag berührt.

Der Antrieb des Förderkolbens, mit dem dieser in Förderrichtung oder in dazu entgegengesetzter Ansaugrichtung bewegt wird, kann beliebig ausgebildet sein. Bei einer besonders einfachen Ausführungsform ist der Förderkolben mittels eines außerhalb des Hohlraums angreifenden fluiden Druckmittels in Förderrichtung angetrieben und weist eine in Ansaugrichtung wirksame mechanische Rückstellung auf (Anspruch 5).
Eine derartige Ausgestaltung ist von Vorteil, falls die zu schmierende Baumaschine ohnehin für ihren Betrieb ein entsprechendes Druckmittel benötigt.
Falls die Höhe des Betriebsdrucks des fluiden Druckmittels zeitlich in geeigneter Weise verändert wird, kann die Arbeitsweise der Schmierfett-Zuführeinrichtung - wie mit der bereits erwähnten Druckschrift EP-B1-0430024 beschrieben - auch automatisiert werden.

Die Zusatz-Einrichtung - welche die Rückführung eines Teils des in den Hohlraum angesaugten Schmierfetts ermöglicht - kann aus einem nachgiebig in der Schließstellung gehaltenen Rückführ-Sperrelement bestehen, über welches eine in den Hohlraum einmündende Rückführleitung zumindest zeitweilig an die Zuführleitung angeschlossen ist (Anspruch 6).
Bei dieser Ausführungsform des Erfindungsgegenstandes ist eine in den Hohlraum einmündende Rückführleitung nach Überschreiten eines durch das Rückführ-Sperrelement vorgegebenen Drucks an die Zuführleitung angeschlossen, solange der sich in Förderrichtung bewegende Förderkolben innerhalb des Hohlraums eine geeignete Lage einnimmt.

Im Rahmen der Erfindung kann die Rückführleitung - über welche ggfs. eine Rückführ-Verbindung zwischen dem Verdichtungsabschnitt und der Zuführleitung hergestellt wird - außerhalb des Förderkolbens angeordnet sein, wobei ihre Einmündung in den Hohlraum das Ende des Verdichtungsabschnitts in Förderrichtung festlegt (Anspruch 7).
Die in Rede stehende Ausführungsform arbeitet in dem hier angesprochenen Zusammenhang folgendermaßen: Nachdem der Förderkolben im Laufe seiner Bewegung in Förderrichtung die Zuführleitungseinmündung verschlossen hat, wird anschließend das in den Hohlraum angesaugte inkompressible Schmierfett - bei geöffnetem Zuführ-Sperrelement - solange in die Rückführleitung gepreßt, bis auch deren Einmündung in den Hohlraum durch den seine Förderbewegung fortsetzenden Förderkolben blockiert wird. Danach wird das nunmehr im Förderabschnitt eingeschlossene Schmierfett-Volumen bei sich öffnendem Sperrelement in die Förderleitung transportiert.
Die Länge des Verdichtungsabschnitts in Förderrichtung entspricht dabei dem Abstand zwischen dem Endbereich der Zuführleitungseinmündung und dem Endbereich der Einmündung der Rückführleitung in den Hohlraum; der letztgenannte Endbereich bildet gleichzeitig den Anfangsbereich des Förderabschnitts, welcher in Förderrichtung durch den Verstellanschlag begrenzt ist.

Abweichend von der zuvor beschriebenen Ausführungsform (gemäß Anspruch 7) kann der Erfindungsgegenstand jedoch auch derart ausgestaltet sein, daß die Rückführleitung nebst Rückführ-Sperrelement in den Förderkolben integriert ist (Anspruch 8).
Die Rückführleitung kann dabei aus einer in den Förderkolben-Kopf einmündenden Längsbohrung und einer mit dieser verbundenen Querbohrung bestehen, die auf der der Zuführleitungseinmündung zugewandten Seite an der Kolben-Umfangsfläche austritt (Anspruch 9). Dementsprechend ergibt sich die Länge des Verdichtungsabschnitts in Förderrichtung aus der zugehörigen Längserstreckung der Zuführleitungseinmündung in den Hohlraum zuzüglich der Länge der Querbohrung an der der Zuführleitungseinmündung zugewandten Kolben-Umfangsfläche.
Sobald die Querbohrung bei Schmierfett-Förderung des Förderkolbens den Anfangsbereich der Zuführleitungseinmündung erreicht hat, nimmt das Rückführ-Sperrelement die Öffnungsstellung ein mit der Folge, daß durch die Längsbohrung und die Querbohrung Schmierfett in die Zuführleitung zurückgeführt wird. Dieser Vorgang läuft solange ab, bis im Laufe der Weiterbewegung des Förderkolbens in Förderrichtung der Endbereich der Querbohrung mit dem Endbereich der Zuführleitungseinmündung zusammenfällt und dann die Verbindung zwischen der Querbohrung und der Zuführleitungseinmündung unterbrochen wird. Die zuletzt angesprochene Stellung des Förderkolbens innerhalb des Hohlraums legt gleichzeitig den Anfangsbereich des Förderabschnitts - und damit dessen Länge in Förderrichtung - fest.

Im Gegensatz zu den bisher angesprochenen Ausführungsformen mit "einteiligem" Förderkolben kann dieser erfindungsgemäß innerhalb des Hohlraums auch einen Außenkolben aufweisen, der sich relativ zum Förderkolben axial bewegen kann und dessen Bewegungsspielraum einerseits durch ein Halteelement am Förderkolben und andererseits durch eine Begrenzungsfläche festgelegt ist, an welcher der Verdichtungsabschnitt in den einen kleineren Durchmesser aufweisenden Förderabschnitt übergeht. Dabei ist der Antrieb der beiden Kolben (Förderkolben bzw. Außenkolben) derart ausgestaltet, daß die am Außenkolben in Förderrichtung angreifende Verdichtungskraft kleiner als die den Förderkolben in dieser Richtung bewegende Antriebskraft und derart eingestellt ist, daß der Außenkolben - entgegen der Wirkung des in den Hohlraum eingetretenen kompressiblen Mediums - seine Endlage an der Begrenzungsfläche einnehmen kann (Anspruch 10).
Die in Rede stehende Auslegung des Antriebs hat zur Folge, daß sich zunächst beide Kolben - entgegen dem vom angesaugten kompressiblen Medium ausgehenden Widerstand - solange in Förderrichtung weiterbewegen, bis der Außenkolben an der Begrenzungsfläche zur Anlage gekommen ist und das kompressible Medium in entsprechend verdichtetem Zustand nur noch den Förderabschnitt ausfüllt. Dieses wird anschließend in die Förderleitung überführt, sobald aufgrund der Weiterbewegung des Förderkolbens in Förderrichtung im Förderabschnitt das die Förderleitung blockierende Sperrelement in seine Öffnungsstellung überführt worden ist, und zwar unter Einwirkung eines ausreichend hohen Druckniveaus oder - wie zuvor erwähnt (vgl. Anspruch 4) - auf mechanischem Weg.
Im Falle der Schmierfett-Förderung bewegen sich beide Kolben solange gemeinsam in Förderrichtung, bis der Außenkolben die Zuführleitungseinmündung blockiert hat. Da sich der Förderkolben aufgrund der an ihm angreifenden größeren Antriebskraft anschließend in Förderrichtung weiterbewegt, wird der Außenkolben unter Einwirkung des inkompressiblen Schmierfetts entgegen der Förderrichtung zurückgeschoben, wodurch eine Rückführ-Verbindung mit der Zuführleitung hergestellt wird. Diese Rückführ-Verbindung bleibt solange bestehen, bis der Förderkolben im Laufe der weiteren Bewegung in Förderrichtung den Anfangsbereich des Förderabschnitts erreicht und diesen gegen den vorausgehenden Verdichtungsabschnitt verschließt. Das nunmehr im Förderabschnitt befindliche Schmierfett wird anschließend - nach Öffnen des Sperrelements - in die Förderleitung überführt, bis der Förderkolben seine Endlage am Verstellanschlag eingenommen hat.

Der Vorteil der in Rede stehenden Ausführungsform besteht darin, daß der relativ zum Förderkolben bewegliche Außenkolben einerseits bei der Verdichtung eines kompressiblen Mediums mitwirkt und andererseits bei Schmierfettförderung selbsttätig eine Rückführ-Verbindung mit der Zuführleitung herstellt. Dementsprechend ist die "zweiteilige" Kolbenanordnung nicht auf die Verwendung eines besonderen Rückführ-Sperrelements angewiesen.

Eine besonders einfache Ausführungsform mit zweiteiliger Kolbenanordnung ist dadurch gekennzeichnet, daß der Außenkolben außerhalb des Hohlraums mit dem fluiden Druckmittel beaufschlagt ist, welches auch den Förderkolben antreibt (Anspruch 11). Danach müssen die mit dem fluiden Druckmittel beaufschlagten Kolbenflächen lediglich der geforderten Antriebskraft entsprechend unterschiedlich groß ausgebildet sein.

Die gegebenenfalls zum Einsatz kommenden Sperrelemente - d. h. das Sperrelement für die Förderleitung bzw. das Rückführ-Sperrelement - können an sich beliebig ausgestaltet sein; vorzugsweise bestehen sie jeweils aus einem federbeaufschlagten Rückschlagventil(Anspruch 12).

Zweckmäßig bildet das mit der Förderleitung zusammenwirkende Sperrelement unmittelbar einen Teil der Wandung des Förderabschnitts vor der Förderleitung, und zwar derart,daß der Förderabschnitt zumindest annähernd das Volumen "Null" aufweist, falls der Förderkolben an dem seinen Bewegungsspielraum im Hohlraum begrenzenden Verstellanschlag anliegt (Anspruch 13).
Bei dieser Ausgestaltung ist das betreffende Sperrelement im Bereich des Verstellanschlags also derart ausgebildet und an diesen angepaßt, daß zwischen der den Förderabschnitt begrenzenden Stirnfläche des Verstellanschlags und dem Sperrelement selbst möglichst keine Ausnehmungen, Aussparungen, Lücken oder dergleichen vorhanden sind, falls das Sperrelement seine Schließstellung einnimmt.

Der Verstellanschlag - über welchen sich die Menge und damit das Volumen des Förderabschnitts verändern läßt - kann in an sich bekannter Weise (vgl. dazu den eingangs erwähnten Stand der Technik) mit einem Gewindebolzen ausgestattet sein, welcher sich über ein Innengewinde an dem auch den Hohlraum aufnehmenden Bauelement abstützt. Durch eine Drehbewegung des Gewindebolzens läßt sich somit die Lage des Verstellanschlags bezüglich des Hohlraums in Förderrichtung bzw. in dazu entgegengesetzter Ansaugrichtung beeinflussen.

Die Erfindung wird nachfolgend anhand mehrerer in der Zeichnung schematisiert dargestellter Ausführungsbeispiele erläutert.
Es zeigen:
- Fig. 1a, b: einen Teilschnitt durch die Fördereinheit der erfindungsgemäßen Schmierfett-Zuführeinrichtung in unterschiedlichen Betriebszuständen, wobei die Rückführleitung außerhalb des Förderkolbens angeordnet ist,
- Fig. 2a, b: einen Teilschnitt durch die Fördereinheit der erfindungsgemäßen Schmierfett-Zuführeinrichtung in verschiedenen Betriebszuständen, wobei die Rückführleitung im Förderkolben angeordnet ist,
- Fig. 3: einen Teilschnitt durch eine Fördereinheit, deren Förderkolben zusätzlich mit einem Außenkolben ausgestattet ist,
- Fig. 4a bis d: verschiedene Betriebszustände der Fördereinheit gemäß Fig. 3 bei Luftförderung,
- Fig. 5a bis d: verschiedene Betriebszustände der Fördereinheit gemäß Fig. 3 bei Schmierfett-Förderung,
- Fig. 6: eine Ansicht einer Fördereinheit mit zugehörigem Schmierfett-Vorratsbehälter und
- Fig. 7a, b: einen Teilschnitt bzw. eine Teilansicht einer Anordnung, bei welcher die erfindungsgemäße Schmierfett-Zuführeinrichtung an dem Außengehäuse eines Hydraulikhammers befestigt ist.

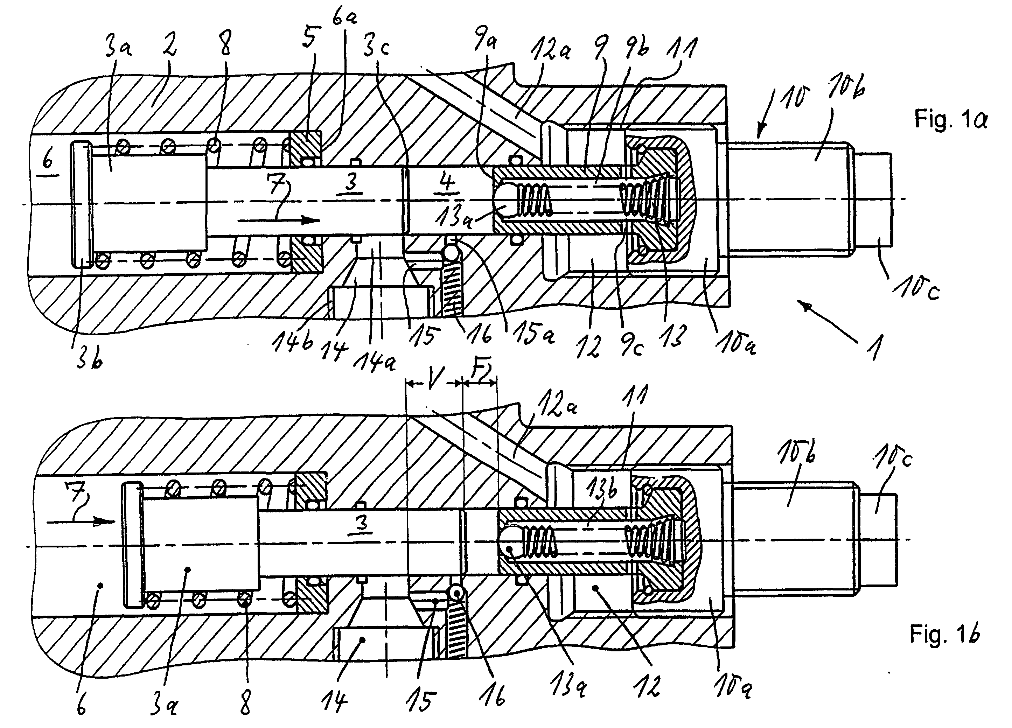

Die allgemein mit 1 bezeichnete Fördereinheit, welche einen Hauptbestandteil der erfindungsgemäßen Schmierfett-Zuführeinrichtung darstellt, weist in einem Fördergehäuse 2 einen geradlinig hin und her bewegten Förderkolben 3 auf, welcher in einen Hohlraum 4 innerhalb des Fördergehäuses 2 hineinragt (vgl. Fig. 1a, b). Außerhalb des Hohlraums 4 (d. h. in Fig. 1a, b auf der linken Seite) geht der Förderkolben 3 in einen Führungsabschnitt 3a über, an den sich (in der Zeichnung nach links) eine Abschlußplatte 3b anschließt. Die Bestandteile 3a und 3b sind - ebenso wie eine ihnen vorgelagerte Dichtscheibe 5 - in einer größer bemessenen Kammer 6 angeordnet; diese kann in an sich bekannter Weise über eine nicht dargestellte Versorgungsleitung mit einem unter Druck stehenden Fluid beaufschlagt werden mit der Folge, daß an dem Förderkolben 3 eine in Förderrichtung (Pfeil 7) wirksame Antriebskraft angreift.
In dem dargestellten Ausführungsbeispiel ist der Förderkolben mit einer mechanischen Rückstellung in Gestalt einer vorgespannten Schraubenfeder 8 ausgestattet, die sich gleichzeitig an der Abschlußplatte 3b und der Dichtscheibe 5 abstützt; letztere stützt sich förderseitig an einem Absatz 6a der Kammer 6 ab. Unter Einwirkung der Schraubenfeder 8 führt der Förderkolben 3 eine der Förderrichtung entgegengesetzte Ansaugbewegung (in der Zeichnung nach links) aus, falls die Kammer 6 druckentlastet wird.

Der Hohlraum 4 wird - in Förderrichtung (Pfeil 7) gesehen - durch die Stirnfläche 9a eines Verstellanschlags 9 begrenzt, welcher im wesentlichen buchsen- oder hülsenartig ausgebildet und auf der von der Stirnfläche 9a abgewandten Seite an einem Verstellbolzen 10 befestigt ist. Dieser weist (von links nach rechts gesehen) einen Verstellgewindeabschnitt 10a, einen Sicherungsgewindeabschnitt 10b und einen Vierkantabschnitt 10c auf, über welchen er mittels eines geeigneten Werkzeugs gedreht werden kann.
Der Verstellgewindeabschnitt 10a - in dem auch der Verstellanschlag 9 ruht - greift innerhalb des Fördergehäuses 2 in ein Innengewinde 11 ein, welches einen Teil der Wandung einer Förderleitung 12 bildet. Der im wesentlichen außerhalb des Fördergehäuses liegende Sicherungsgewindeabschnitt 10b dient dazu, den Verstellbolzen 10 mittels einer nicht dargestellten Sicherungsmutter bezüglich des Fördergehäuses zu fixieren und gegen eine unerwünschte Verschiebung zu sichern.
Durch Drehen des Verstellbolzens 10 bezüglich des Fördergehäuses läßt sich der Verstellanschlag 9 axial verschieben, wodurch sich die Lage auch der Stirnfläche 9a bezüglich des Hohlraums 4 verändert.

Der Verstellanschlag weist innerhalb seiner Längsbohrung 9b ein Sperrelement in Gestalt eines federbeaufschlagten Rückschlagventils 13 auf, dessen Verschlußkugel 13a in der Nähe der Stirnfläche 9a nachgiebig an dem Verstellanschlag in Anlage gehalten ist und in der dargestellten Schließstellung den Hohlraum 4 gegen die Längsbohrung 9b blockiert. Diese steht über mehrere Austrittsbohrungen 9c mit der Förderleitung 12 in Verbindung, deren Verlängerung 12a aus dem Fördergehäuse 2 austritt. Über die Verlängerung können die nachgeschalteten Schmierstellen mit Schmierfett versorgt werden.

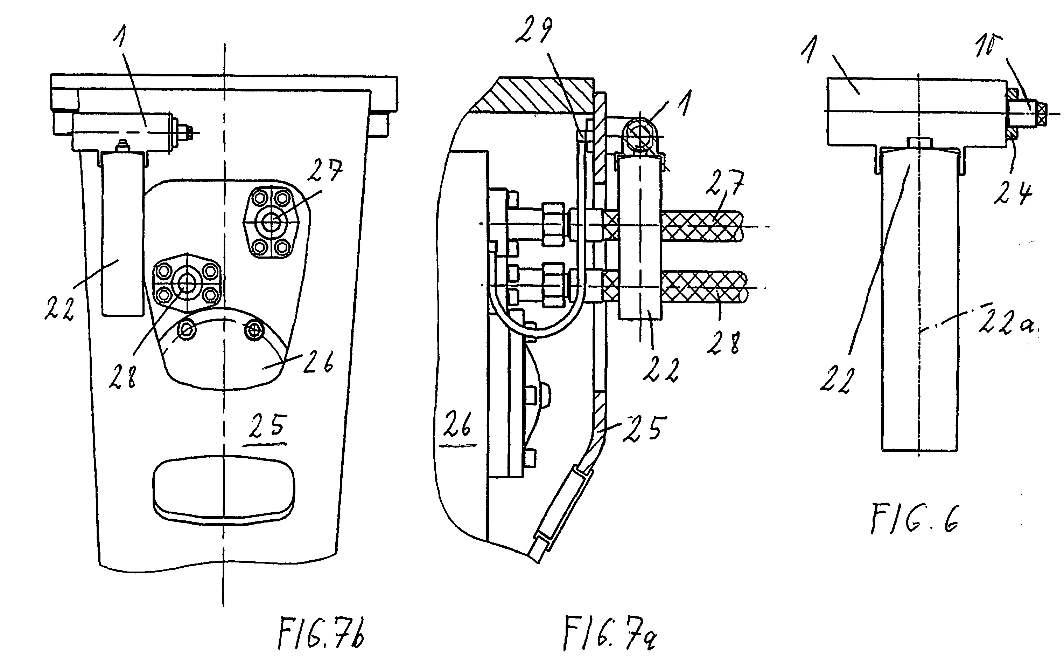

Das Fördergehäuse 2 weist weiterhin eine in den Hohlraum 4 einmündende Zuführleitung 14 auf, deren Einmündung 14a in den Hohlraum 4 - in Förderrichtung (Pfeil 7) gesehen - im Bereich zwischen dem Absatz 6a und der Stirnfläche 9a liegt. Über ein Anschlußgewinde 14b kann zwischen der Zuführleitung und einem Schmierfett-Vorratsbehälter (vgl. dazu beispielsweise Fig. 6) eine lösbare Verbindung hergestellt werden.

Die Zuführleitung 14 steht mit einer Rückführleitung 15 in Verbindung, die mit einem federbeaufschlagten Rückschlagventil 16 ausgestattet ist. Dieses nimmt im Normalfall die dargestellte Schließstellung ein und kann entgegen seiner Rückstellung in die Öffnungsstellung überführt werden, falls das im Hohlraum 4 vorliegende Druckniveau einen vorgegebenen Grenzwert überschreitet.
Die Einmündung 15a der Rückführleitung in den Hohlraum befindet sich - in Förderrichtung (Pfeil 7) gesehen - zwischen der Einmündung 14a und der Stirnfläche 9a des Verstellanschlags.
Durch die erwähnte Ausgestaltung und Anordnung der Rückführleitung 15 wird der Hohlraum 4 in einen Verdichtungsabschnitt V und einen sich daran anschließenden Förderabschnitt F unterteilt (vgl. dazu Fig. 1b).
Die Länge des Verdichtungsabschnitts entspricht dabei - jeweils in Förderrichtung (Pfeil 7) gesehen - in etwa dem Abstand zwischen den Endbereichen der Einmündungen 14a und 15a, diejenige des Förderabschnitts F in etwa dem Abstand zwischen dem Endbereich der Einmündung 15a und der Stirnfläche 9a.
Ausweislich der Darstellung ist das Rückschlagventil 13 derart ausgebildet, daß der dem Förderkolben 3 zugewandte Oberflächenanteil der Verschlußkugel 13a zumindest annähernd in der Ebene der Stirnfläche 9a liegt.

Unabhängig davon, ob in den Hohlraum 4 ein kompressibles Medium (normalerweise Luft) oder inkompressibles Schmierfett angesaugt worden ist, sind die Rückschlagventile 16 und 13 hinsichtlich ihrer Schließkraft derart aufeinander abgestimmt, daß das als Rückführ-Sperrelement dienende Rückschlagventil 16 bei einem niedrigeren Druckniveau in die Öffnungsstellung überführt wird als das der Förderleitung 12 zugeordnete Rückschlagventil 13.
Darüber hinaus ist die Schließkraft des Rückschlagventils 16 derart bemessen, daß es bei Förderung eines kompressiblen Mediums stets die Schließstellung einnimmt; dies hat zur Folge, daß das etwa in den Hohlraum 4 angesaugte kompressible Medium - nach Öffnen des Rückschlagventils 13 in Folge eines ausreichend hohen Druckniveaus - ausschließlich über die Längsbohrung 9b und die Förderleitung 12, 12a nach außen abgeführt werden kann. Statt dessen kann die Öffnung des Rückschlagventils 13 auch auf mechanischem Weg herbeigeführt werden, und zwar dadurch, daß der Förderkolben 3 und/oder das Rückschlagventil 13 in Richtung auf das jeweils gegenüberliegende Element 13 bzw. 3 einen Vorsprung aufweist. Über diesen stützt sich der Förderkolben 3 - sobald er sich im Laufe seiner Förderbewegung innerhalb des Förderabschnitts F dem Verstellanschlag 9 ausreichend weit angenähert hat - ab und überführt bei Fortsetzung seiner Förderbewegung das Rückschlagventil 13 mechanisch in seine Öffnungsstellung.

Die Ausführungsform gemäß Fig. 1a, b arbeitet wie folgt: Falls durch die Ansaugbewegung des Förderkolbens 3 ( in Gegenrichtung zum Pfeil 7) aus der Zuführleitung 14 in den Hohlraum 4 Luft angesaugt worden ist, führt die sich anschließende Bewegung des Förderkolbens 3 in Förderrichtung zunächst dazu, daß der Förderkolben-Kopf 3c die Zuführleitungseinmündung 14a verschließt und anschließend das in den Abschnitten V und F eingeschlossene Luftvolumen - bei weiterhin geschlossenem Rückschlagventil 16 - solange verdichtet wird, bis der Förderkolben 3 auch den Endbereich der Einmündung 15a erreicht und somit die Rückführleitung 15 gegen den Hohlraum 4 blockiert hat (vgl. dazu Fig. 1b).
Die nunmehr nur noch den Förderabschnitt F ausfüllende Luft steht zu diesem Zeitpunkt unter einem erhöhten Druck, der dazu ausreicht, das Rückschlagventil 13 bei der Weiterbewegung des Förderkolbens 3 in Förderrichtung zu öffnen und die Luft über die Bohrungen 9b und 9c der Förderleitung 12 zuzuführen. Dieser Fördervorgang läuft solange ab, bis der Förderkolbenkopf 3c an der Stirnfläche 9a zur Anlage gekommen ist und somit der Förderabschnitt F (zumindest annähernd) das Volumen "Null" angenommen hat. Dementsprechend ist die Fördereinheit 1 in der Lage, ein etwa angesaugtes kompressibles Medium vollständig aus dem Hohlraum 4 abzuführen.
Wie bereits zuvor erläutert worden ist, kann auch in diesem Fall das Rückschlagventil 13 - bei geeigneter Ausbildung des Förderkolbens 3 und/oder des Rückschlagventils 13 - mechanisch in die Öffnungsstellung überführt werden.

Falls infolge der Ansaugbewegung des Förderkolbens 3 inkompressibles Schmierfett in den Hohlraum 4 angesaugt worden ist, führt dies mit dem Verschließen der Einmündung 14a durch den Förderkolben 3 (vgl. dazu Fig. 1a) dazu, daß bei Fortsetzung der Bewegung in Förderrichtung (Pfeil 7), in den Abschnitten V und F ein ausreichend hohes Druckniveau entsteht, welches das Rückschlagventil 16 öffnet, so daß der Kolbenbewegung entsprechend Schmierfett in die Rückführleitung 15 und die Zuführleitung 14 ausgeschoben werden kann. Dieser Rückführvorgang läuft solange ab, bis der Förderkolben 3 (wie in Fig. 1b dargestellt) auch die Einmündung 15a verschlossen hat. Der weitere Vorschub des Förderkolbens 3 führt anschließend dazu, daß sich das Rückschlagventil 13 öffnet und das den Förderabschnitt F einnehmende Schmierfett bis zur Anlage des Förderkolbens an der Stirnfläche 9a in Richtung auf die Förderleitung 12 ausgeschoben wird.

In beiden Betriebsfällen, d. h. bei Förderung eines kompressiblen Mediums und bei Förderung inkompressiblen Schmierfetts, beinhaltet der Förderabschnitt F (nach Verschließen der Einmündung 15a) das im Höchstfall förderbare Volumen.
Bei der Förderung eines kompressiblen Mediums wird dieses beim Durchfahren des Verdichtungsabschnitts lediglich komprimiert; im Gegensatz dazu dient der Verdichtungsabschnitt bei Schmierfett-Förderung dazu, den seinem Volumen entsprechenden Schmierfettanteil nach außen abzuführen, bis der Förderkolben im Laufe seiner Förderbewegung die Rückführleitungseinmündung 15a blockiert hat.

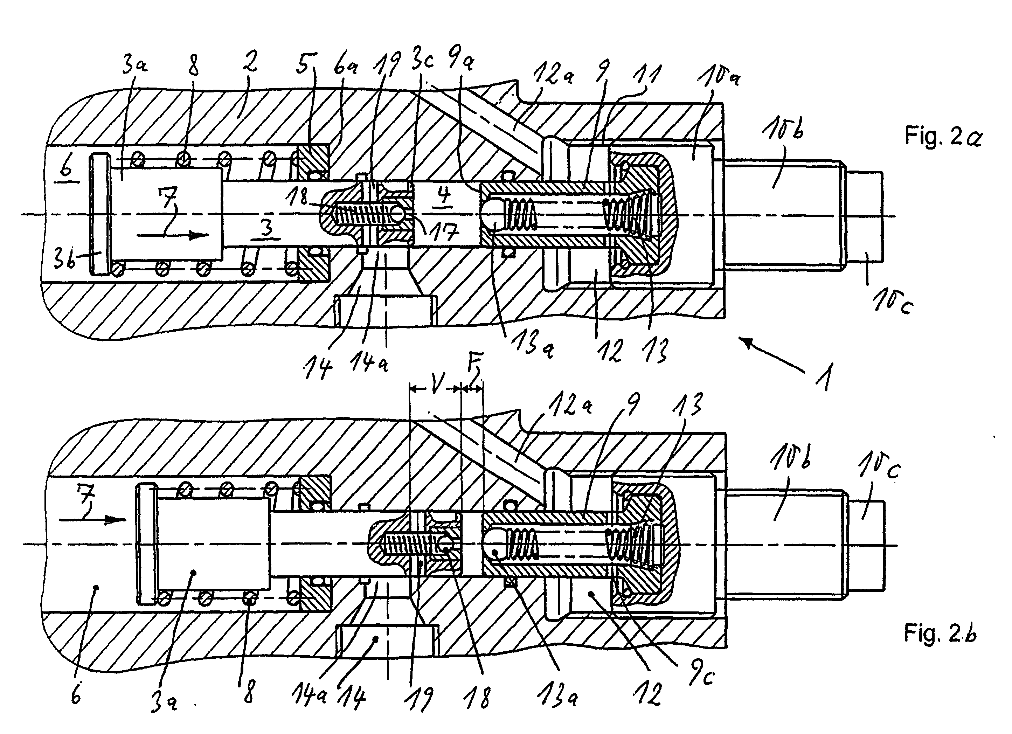

Bei der Ausführungsform gemäß Fig. 2a, b ist die Rückführleitung nebst Rückführ-Sperrelement in den Förderkolben 3 integriert.
Die Rückführleitung besteht dabei aus einer in den Förderkolben-Kopf 3c einmündenden Längsbohrung 17, die mit einem federbeaufschlagten Rückschlagventil 18 ausgestattet ist, und einer mit der Längsbohrung verbundenen Querbohrung 19, welche auf der der Zuführleitungseinmündung 14a zugewandten Seite aus der Kolbenumfangsfläche austritt.
Die Länge des Verdichtungsabschnitts V entspricht dabei dem Abstand in Förderrichtung zwischen der Stirnfläche des Förderkolben-Kopfes 3c und der von diesem abgewandten Außenkante der Querbohrung 19 in dieser Richtung.

Die Länge des Förderabschnitts F in Förderrichtung (vgl. dazu Fig. 2b) entspricht dem Abstand zwischen dem Förderkolben-Kopf 3c und der Stirnfläche 9a, nachdem der Förderkolben 3 eine Lage erreicht hat, bei welcher die Verbindung zwischen der Einmündung 14a und der Querbohrung 19 unterbrochen ist, wobei der Förderkolben 3 die Zuführleitungseinmündung 14a blockiert.
Im übrigen arbeitet die in Rede stehende Alternativlösung bei Förderung eines kompressiblen Mediums bzw. bei Schmierfett-Förderung in entsprechender Weise wie die Ausführungsform gemäß Fig. 1a, b.

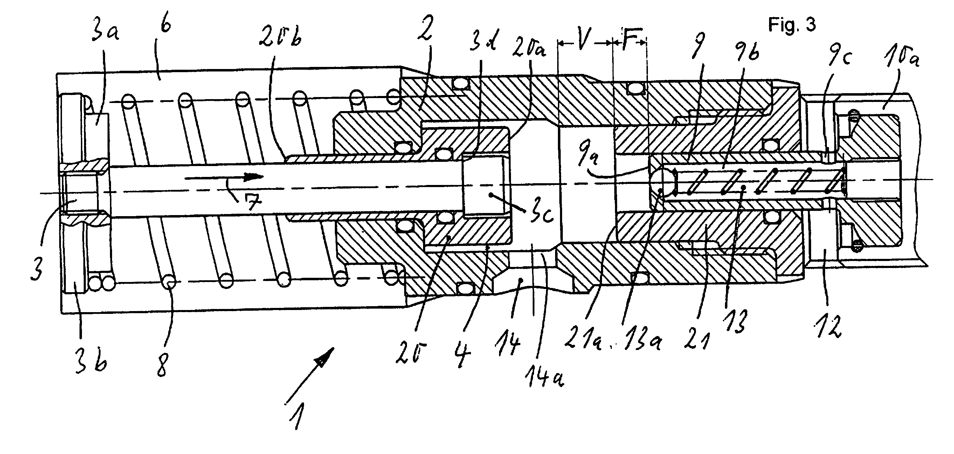

Bei der Ausführungsform gemäß Fig. 3 ist der Förderkolben 3 innerhalb des Hohlraums 4 mit einem Außenkolben 20 ausgestattet, der sich relativ zum Förderkolben 3 axial bewegen kann und dessen Bewegungsspielraum einerseits durch einen Absatz 3d am Förderkolben und andererseits durch eine Begrenzungsfläche 21a festgelegt ist, an welcher der Verdichtungsabschnitt V in den einen kleineren Durchmesser aufweisenden Förderabschnitt F übergeht.
Die Begrenzungsfläche 21a stellt dabei die den Kolben 3 und 20 zugewandte Stirnfläche eines buchsenartigen Einsatzteils 21 dar, welches am Fördergehäuse 2 befestigt ist und in welches der Verstellanschlag 9 hineinragt.
Die Länge des Förderabschnitts F entspricht - in Förderrichtung (Pfeil 7) gesehen - dem Abstand zwischen der Begrenzungsfläche 21a und der Stirnfläche 9a des Verstellanschlags.
Die Länge des Verdichtungsabschnitts in Förderrichtung ist einerseits festgelegt durch die Lage der Begrenzungsfläche 21a und andererseits durch die Lage, welche die Stirnfläche 20a des Außenkolbens einnimmt, nachdem dieser im Laufe seiner Bewegung in Förderrichtung gerade die Zuführleitungseinmündung 14a gegen den Hohlraum 4 abgesperrt hat.
Die antriebsseitige Stirnfläche 20b des Außenkolbens - welche in der gezeigten Ausgangsstellung in die Kammer 6 hineinragt - kann über diese ebenso wie der Förderkolben 3 mit einem fluiden Druckmittel beaufschlagt und dadurch in Förderrichtung verschoben werden. Dementsprechend benötigt der Außenkolben 20 keine besondere, eigenständige Antriebseinheit.

Wie die Darstellung weiterhin erkennen läßt, weist die in Rede stehende Ausführungsform mit "zweiteiliger" Kolbenanordnung keine besondere Rückführleitung nebst Rückführ-Sperrelement auf; deren Funktion übernimmt gleichzeitig der Außenkolben 20.
Falls sich der Förderkolben 3 nach Druckentlastung der Kammer 6 (entgegen Pfeil 7) unter Einwirkung der Schraubenfeder 8 in Ansaugrichtung bewegt, wird der Außenkolben 20 über die Fläche 3d in dieser Richtung mitgeführt, bis er die gezeigte Ausgangsstellung erreicht hat.

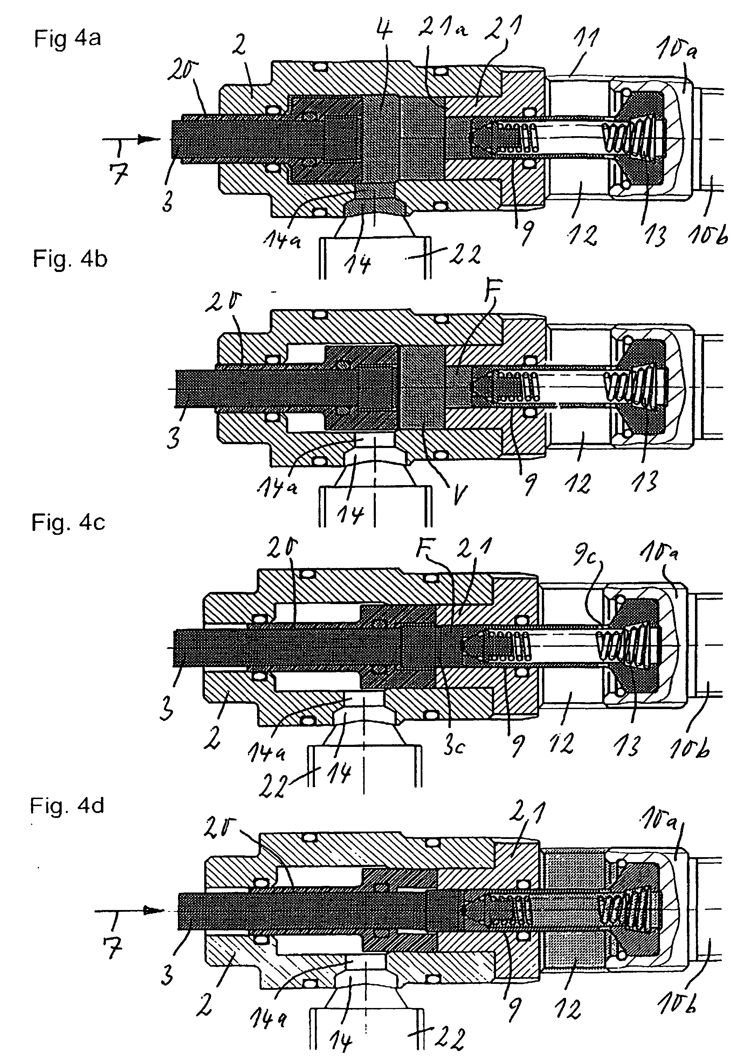

Die Arbeitsweise der in Rede stehenden Ausführungsform (gemäß Fig. 3) bei Förderung eines kompressiblen Mediums (Luftförderung) wird nachfolgend anhand der Figuren 4a bis d im einzelnen erläutert.
Der mit der Fördereinheit zusammenwirkende, lösbar befestigte Schmierfett-Vorratsbehälter ist dabei mit 22 bezeichnet.

Fig. 4a zeigt den Betriebszustand der Schmierfettzuführeinrichtung kurz vor Beendigung der Ansaugphase, inwelcher bedingt durch das Auswechseln des Schmierfett-Vorratsbehälters 22 - in den Hohlraum 4 innerhalb des Fördergehäuses 2 Luft angesaugt worden ist. Das im Verstellanschlag 9 angeordnete Rückschlagventil 13 nimmt dabei die Schließstellung ein.

Bei Druckbeaufschlagung der Kammer 6 (vgl. dazu Fig. 3) bewegen sich der Förderkolben 3 und der Außenkolben 20 in Förderrichtung nach rechts, wobei zunächst die Zuführleitungseinmündung 14a - wie in Fig. 4b dargestellt - gegen den Hohlraum 4 abgesperrt wird. Die angesaugte Luft ist dementsprechend in den Abschnitten V und F eingeschlossen, da das Rückschlagventil 13 weiterhin die Schließstellung einnimmt.
Da beide Kolben 3 und 20 zunächst ihre Bewegung in Förderrichtung fortsetzen, wird die eingeschlossene Luft währenddessen verdichtet, wobei der Außenkolben 20 schließlich an der Begrenzungsfläche 21a zur Anlage kommt und der Förderkolben 3 den Förderabschnitt F erreicht. Dementsprechend nimmt die verdichtete Luft nur noch das dem Förderabschnitt F entsprechende Volumen ein (Fig. 4c).
Die zuvor skizzierten Abläufe setzen also voraus, daß die den Außenkolben 20 antreibende Verdichtungskraft derart bemessen ist, daß der Außenkolben - entgegen dem von der Luft ausgehenden Widerstand - an der Begrenzungsfläche 21a zur Anlage kommt.

Da die am Förderkolben 3 angreifende Antriebskraft - wie bereits erwähnt - größer ist als die vom Außenkolben 20 ausgehende Verdichtungskraft, kann der Förderkolben seine Förderbewegung im Förderabschnitt F fortsetzen. Der damit verbundene Druckanstieg innerhalb des Förderabschnitts hat zur Folge, daß das Rückschlagventil 13 in seine Öffnungstellung überführt und die verdichtete Luft durch den Verstellanschlag 9 hindurch der Förderleitung 12 zugeführt wird.
Der Förderkolben setzt dabei seine Bewegung in Förderrichtung solange fort, bis er am Verstellanschlag zur Anlage gekommen ist und der Förderabschnitt F zumindest annähernd das Volumen "Null" angenommen hat (Fig. 4d).

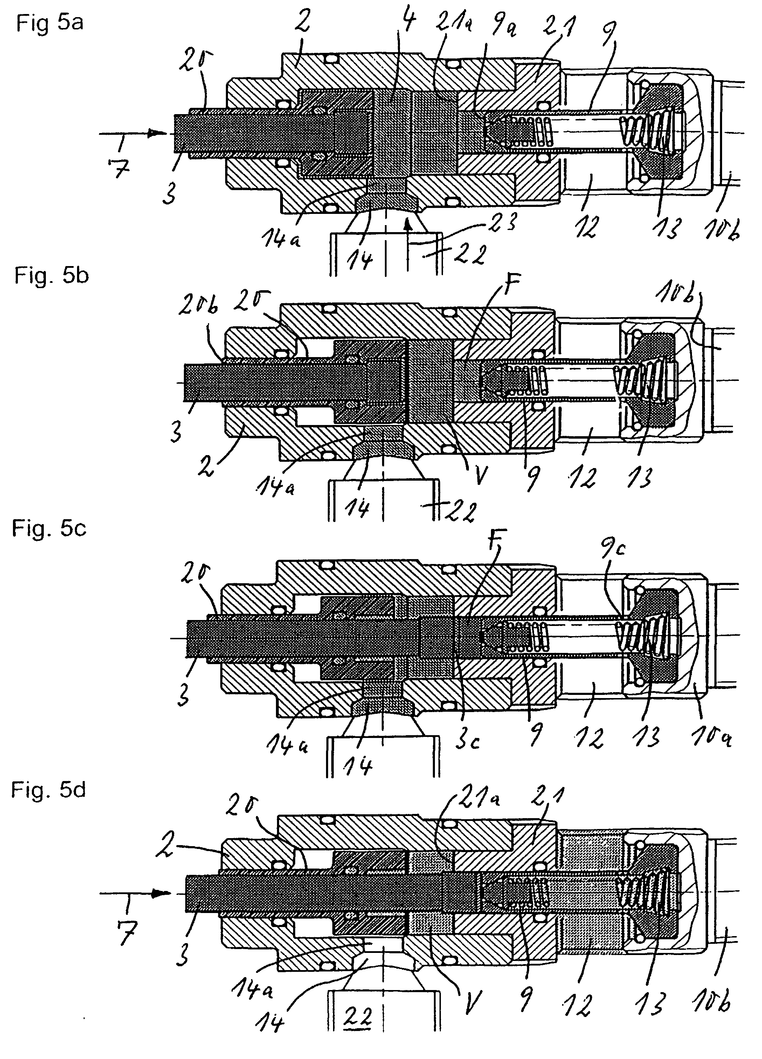

Die Arbeitsweise der Schmierfett-Zuführeinrichtung gemäß Fig. 3 bei Schmierfett-Förderung ist aus den nachfolgend angesprochenen Fig. 5a bis d ersichtlich:
Im Laufe der in Fig. 5a dargestellten Ansaugphase ist durch Bewegung der Kolben 3 und 20 aus dem Schmierfett-Vorratsbehälter 22 durch die Zuführleitung 14 Schmierfett in den Hohlraum 4 angesaugt worden, wobei das Rückschlagventil 13 im Verstellanschlag 9 die Schließstellung einnimmt.
Die Eintrittsbewegung des Schmierfetts in den Hohlraum 4 ist durch einen Pfeil 23 angedeutet.

Durch Druckbeaufschlagung der Kammer 6 (vgl. dazu Fig. 3) werden die Kolben 3 und 20 veranlaßt, sich in Förderrichtung (Pfeil 7) nach rechts zu bewegen mit der Folge, daß zunächst die Zuführleitungseinmündung 14a - wie aus Fig. 5b ersichtlich - durch den Außenkolben 20 verschlossen wird. Dementsprechend befindet sich das Schmierfett nur in dem Teil des Hohlraums 4, welcher durch die Abschnitte V und F definiert ist.
Da die vom Außenkolben 20 ausgehende Verdichtungskraft kleiner eingestellt ist als die am Förderkolben 3 angreifende Antriebskraft, kann der Außenkolben seine Bewegung in Förderrichtung entgegen der Wirkung des inkompressiblen Schmierfetts im Gegensatz zum Förderkolben 3 nicht fortsetzen; dessen Weiterbewegung bis zum Eintritt in den Förderabschnitt F hat zur Folge, daß im Bereich des Verdichtungsabschnitts V Schmierfett verdrängt wird, da das Rückschlagventil 13 weiterhin geschlossen bleibt. Dementsprechend wird der Außenkolben 20 - entgegen der Förderrichtung (Pfeil 7) - zurückgeschoben und gibt dabei die Zuführleitungseinmündung 14a frei, so daß der Verdrängungswirkung des Förderkolbens 3 entsprechend Schmierfett in Richtung auf die Zuführleitung 14 und den Schmierfett-Vorratsbehälter 22 zurückgeführt wird (vgl. dazu Fig. 5c).

Sobald der Förderkolben 3 - wie aus Fig. 5c ersichtlich - den Förderabschnitt F gegen den Verdichtungsabschnitt V abgesperrt hat, führt die Fortsetzung der Förderbewegung des Förderkolbens - und damit das daraus resultierende erhöhte Druckniveau im inkompressiblen Schmierfett - dazu, daß das im Förderabschnitt F vorliegende Druckniveau größer ist als die am Rückschlagventil 13 eingestellte Schließkraft. Dieses wird in die Öffnungsstellung überführt mit der Folge, daß der Förderkolben 3 das im Förderabschnitt F befindliche Schmierfett in Richtung auf die Förderleitung 12 ausschieben kann (Fig. 5d). Dieser Fördervorgang läuft ab, bis der Förderkolben 3 schließlich an dem Verstellanschlag 9 zur Anlage gekommen und das Volumen des Förderabschnitts F zumindest annähernd auf "Null" reduziert worden ist.
Die Weiterbewegung des Förderkolbens 3 nach Blockieren des Förderabschnitts F gegen den Verdichtungsabschnitt V hat zur Folge, daß im Bereich des Verdichtungsabschnitts kein Verdrängungsvorgang mehr stattfindet. Dies führt dazu, daß der Außenkolben 20 schließlich erneut die in Fig. 5d angedeutete Lage einnimmt, in welcher die Zuführleitungseinmündung 14a zumindest annähernd durch ihn gegen den Verdichtungsabschnitt V abgesperrt ist.

Bei der in Rede stehenden Ausführungsform gemäß Fig. 3, 4a bis d und 5a bis d bildet der Außenkolben 20 gleichzeitig eine Zusatz-Einrichtung, über welche - ausgelöst nur durch ein bei Schmierfett-Förderung vorhandenes, ausreichend hohes Druckniveau im Verdichtungsabschnitt V - eine ansonsten blockierte Rückführ-Verbindung zwischen dem Verdichtungsabschnitt und der Zuführleitung 14 hergestellt werden kann, solange sich der Kopf des Förderkolbens 3 bei seiner Bewegung in Förderrichtung (Pfeil 7) in dem Verdichtungsabschnitt befindet.

In Fig. 6 ist die aus der Fördereinheit 1 und dem Schmierfett-Vorratsbehälter 22 bestehene Schmierfett-Zuführeinrichtung nach der Erfindung schematisch dargestellt.
Die Zeichnung läßt auch erkennen, daß der Verstellbolzen 10 des Verstellanschlags durch eine Sicherungsmutter 24 mit der Fördereinheit 1 verspannt und dadurch gegen eine unerwünschte Drehung gesichert ist.

Der Schmierfett-Vorratsbehälter 22 besteht vorzugsweise aus einer handelsüblichen Kartusche, die ohne Werkzeugeinsatz mit der Zuführleitung (vgl. dazu beispielsweise Fig. 3) durch Einschrauben verbunden werden kann.
Der Mantel der Kartusche kann aus flexiblem Material bestehen, welches sich mit zunehmender Entleerung in Richtung auf die Längsachse 22a krümmt und dadurch mittelbar den Entleerungs- bzw. Restfüllgrad erkennen läßt.

Die Kartusche kann jedoch auch mit einem in Richtung der Längsachse 22a verschiebbaren Boden ausgestattet sein und aus transparentem Material bestehen, so daß die Lage des Kartuschenbodens gleichzeitig den Füllgrad der Kartusche anzeigt.

Die Fig. 7a, b zeigen ein Anwendungsbeispiel, bei welchem die Schmierfett-Zuführeinrichtung - bestehend aus der Fördereinheit 1 und dem Schmierfett-Vorratsbehälter 22 (beziehungsweise der zuvor angesprochenen handelsüblichen Kartusche) - am Außengehäuse 25 eines Hydraulikhammers 26 befestigt ist. Dieser ist in an sich bekannter Weise über eine Druckleitung 27 und eine drucklose Rücklaufleitung 28 an ein nicht dargestelltes Hydraulikaggregat angeschlossen. Schematisiert dargestellt ist ferner ein Leitungssystem 29, welches die Fördereinheit 1 mit dem Hydraulikhammer 26 verbindet.
Dieses Leitungssystem (mit zwei getrennten, nicht dargestellten Einzelleitungen) dient dazu, einerseits die Fördereinheit 1 mit Antriebsenergie zu versorgen und andererseits die Förderleitung 12 (vgl. dazu beispielsweise Fig. 1a, b) an die mit Schmierfett zu versorgenden Schmierstellen des Hydraulikhammers 26 anzukoppeln.

Der mit der Erfindung erzielte Vorteil besteht darin, daß mit einfachen Mitteln und zuverlässig ein unerwünschtes kompressibles Medium (im Normalfall Luft) aus dem Bereich des Schmierfett-Vorratsbehälters und der Zuführleitung nach Ansaugen in den Hohlraum der Fördereinheit beseitigt werden kann. Dadurch lassen sich Betriebsstörungen und Schäden an der der Schmierfett-Zuführeinrichtung nachgeschalteten Baumaschine vermeiden, die ansonsten dadurch entstehen können, daß die Schmierfett-Zuführeinrichtung die zugehörigen Schmierstellen nicht ordnungsgemäß mit Schmierfett versorgt.

Nach alledem bezieht sich die Erfindung auch auf ein Verfahren für die Schmierfett-Zuführung an Baumaschinen, welches dadurch gekennzeichnet ist, daß in den Hohlraum einer Fördereinheit zunächst ein größeres Volumen eines kompressiblen oder inkompressiblen Mediums angesaugt und - unabhängig von der Kompressibilität des Mediums - mit jedem Förderhub des zugehörigen Förderkolbens gezielt ein Fördervolumen nach außen weitertransport wird, welches kleiner ist als das zuvor erwähnte Ansaugvolumen. Dementsprechend ist das erfindungsgemäße Verfahren bei Handhabung eines inkompressiblen Mediums weiterhin derart ausgestaltet, daß ein Teil des zunächst in den Hohlraum angesaugten inkompressiblen Mediums vor Einleitung des eigentlichen Fördervorgangs aus dem Hohlraum nach außen zurückgeführt wird.
Zu diesem Zweck muß das mit der Förderleitung zusammenwirkende Sperrelement derart geschaltet werden, daß es erst öffnet, nachdem eine etwaige Rückförderung stattgefunden hat.

## Patentansprüche

1. Schmierfett-Zuführeinrichtung für Baumaschinen, insbesondere hydraulisch betriebene Schlagwerke und Abbruchzangen, mit einer an einen Schmierfett-Vorratsbehälter (22) angeschlossenen Fördereinheit (1), die in einem Hohlraum (4) einen geradlinig hin und her bewegten Förderkolben (3), eine in den Hohlraum (4) einmündende und mit dem Schmierfett-Vorratsbehälter (22) verbundene Zuführleitung (14), eine in den Hohlraum (4) einmündende Förderleitung (12) mit einem nachgiebig in der Schließstellung gehaltenen Sperrelement (13) und einem Verstellanschlag (9) aufweist, welcher den Hub des Förderkolbens (3) in Richtung seiner Förderbewegung (Pfeil 7) begrenzt, wobei die Einmündung (14a) der Zuführleitung (14) in den Hohlraum (4) - in Richtung der Förderbewegung (Pfeil 7) gesehen - vor derjenigen der Förderleitung (12) angeordnet und zumindest zeitweilig gegen den Hohlraum (4) abgesperrt ist, falls sich der Förderkolben (3) in Förderrichtung über sie hinaus verschiebt,
**gekennzeichnet durch** folgende Merkmale:
- der Hohlraum (4) weist - in Richtung der Förderbewegung (Pfeil 7) gesehen - hinter der Einmündung (14a) der zuführleitung (14) in ihn einen Verdichtungsabschnitt (V) und daran anschließend einen Förderabschnitt (F) auf;
- über eine Zusatz-Einrichtung (15, 16; 17 bis 19; 20) wird - ausgelöst **durch** ein nur bei Schmierfett-Förderung vorhandenes, ausreichend hohes Druckniveau im Verdichtungsabschnitt (V) - eine ansonsten blockierte, von dem Verdichtungsabschnitt (V) in die Zuführleitung (14) mündende Rückführ-Verbindung hergestellt, solange sich der Kopf des Förderkolbens (3) bei seiner Bewegung in Förderrichtung in dem Verdichtungsabschnitt (V) befindet; und
- die Schließkraft des Sperrelements (13) ist derart eingestellt, daß es frühestens dann öffnet, wenn der Kopf des Förderkolbens (3) den Förderabschnitt (F) erreicht und gegen den Verdichtungsabschnitt (V) abgesperrt hat.

2. Vorrichtung nach Anspruch 1, **dadurch gekennzeichnet, daß** die Einmündung (9b) der Förderleitung (12) in den Förderabschnitt (F) in dem Verstellanschlag (9) angeordnet ist.

3. Vorrichtung nach zumindest einem der vorhergehenden Ansprüche, **dadurch gekennzeichnet, daß** das Sperrelement (13) in der Schließstellung einen Teil der Stirnfläche (9a) des Verstellanschlags (9) bildet, welche den Förderabschnitt (F) begrenzt.

4. Vorrichtung nach zumindest einem der vorhergehenden Ansprüche, **dadurch gekennzeichnet, daß** das Sperrelement (13) mechanisch geöffnet wird, sobald der Kopf (3c) des Förderkolbens (3) bei seiner Bewegung in Förderrichtung (Pfeil 7) sich im Förderabschnitt (F) in der Nähe des Verstellanschlags (9) befindet.

5. Vorrichtung nach zumindest einem der vorhergehenden Ansprüche, **dadurch gekennzeichnet, daß** der Förderkolben (3) mittels eines außerhalb des Hohlraums (4) angreifenden fluiden Druckmittels in Förderrichtung (Pfeil 7) angetrieben werden kann und eine in Ansaugrichtung wirksame mechanische Rückstellung (8) aufweist.

6. Vorrichtung nach zumindest einem der vorhergehenden Ansprüche, **dadurch gekennzeichnet, daß** die Zusatz-Einrichtung aus einem nachgiebig in der Schließstellung gehaltenen Rückführ-Sperrelement (16 bzw. 18) besteht, über welches eine in den Hohlraum (4) einmündende Rückführleitung (15 bzw. 17, 19) zumindest zeitweilig an die Zuführleitung (14) angeschlossen ist.

7. Vorrichtung nach zumindest einem der vorhergehenden Ansprüche, **dadurch gekennzeichnet, daß** die Rückführleitung (15) außerhalb des Förderkolbens (3) angeordnet ist und ihre Einmündung (15a) in den Hohlraum (4) das Ende des Verdichtungsabschnitts (V) in Förderrichtung (Pfeil 7) festlegt.

8. Vorrichtung nach zumindest einem der Ansprüche 1 bis 6, **dadurch gekennzeichnet, daß** die Rückführleitung (17, 19) nebst Rückführ-Sperrelement (18) in den Förderkolben (3) integriert ist.

9. Vorrichtung nach Anspruch 8, **dadurch gekennzeichnet, daß** die Rückführleitung aus einer in den Förderkolben-Kopf einmündenden Längsbohrung (17) und einer mit dieser verbundenen Querbohrung (19) besteht, die auf der der Zuführleitungseinmündung (14a) zugewandten Seite an der Kolben-Umfangsfläche austritt.

10. Vorrichtung nach zumindest einem der vorhergehenden Ansprüche 1 bis 5, **dadurch gekennzeichnet, daß** der Förderkolben (3) innerhalb des Hohlraums (4) einen Außenkolben (20) aufweist, der sich relativ zum Förderkolben axial bewegen kann und dessen Bewegungsspielraum einerseits durch ein Halteelement (3d) am Förderkolben (3) und andererseits durch eine Begrenzungsfläche (21a) festgelegt ist, an welcher der Verdichtungsabschnitt (v) in den einen kleineren Durchmesser aufweisenden Förderabschnitt (F) übergeht, wobei die am Außenkolben (20) in Förderrichtung (Pfeil 7) angreifende Verdichtungskraft kleiner als die den Förderkolben (3) in dieser Richtung bewegende Antriebskraft und derart eingestellt ist, daß der Außenkolben (20) - entgegen der Wirkung des in den Hohlraum (4) eingetretenen kompressiblen Mediums - seine Endlage an der Begrenzungsfläche (21a) einnehmen kann.

11. Vorrichtung nach Anspruch 10, **dadurch gekennzeichnet, daß** der Außenkolben (20) außerhalb des Hohlraums (4) mit dem fluiden Druckmittel beaufschlagt ist, welches auch den Förderkolben (3) antreibt.

12. Vorrichtung nach zumindest einem der vorhergehenden Ansprüche, **dadurch gekennzeichnet, daß** das Sperrelement (13) bzw. Rückführ-Sperrelement (16 bzw. 18) als federbeaufschlagtes Rückschlagventil ausgebildet ist.

13. Vorrichtung nach zumindest einem der vorhergehenden Ansprüche, **dadurch gekennzeichnet, daß** das Sperrelement (13) unmittelbar einen Teil der Wandung des Förderabschnitts (F) vor der Förderleitung (12) bildet derart, daß der Förderabschnitt (F) zumindest annähernd das Volumen "Null" aufweist, falls der Förderkolben (3) am Verstellanschlag (9) anliegt.

## Claims

1. Grease feed device for construction machinery, in particular hydraulically operated percussion devices and demolition pincers, with a transport unit (1) connected to the grease storage container (22), said transport unit having a piston (3) reciprocating rectilinearly in a cavity (4), a feed line (14) opening into the cavity (4) and connected to the grease storage container (22), a transport line (12) opening into the cavity (4) with a locking element (13) flexibly held in the closed position and a control stop (9), which restricts the stroke of the piston (3) in the direction of its transport movement (arrow 7). wherein - viewed in the direction of the transport movement (arrow 7) - the entrance (14a) of the feed line (14) into the cavity (4) is disposed in front of that of the transport line (12) and is shut off, at least intermittently, from the cavity (4), in the case where the piston (3) is displaced beyond it in the transport direction,
**characterised by** the following features:
- behind the entrance (14a) of the feed line (14) - viewed in the direction of the transport movement (arrow 7)
- the cavity (4) has a compression section (V) and a transport section (F) connected thereto;
- activated by a sufficiently high pressure level in the compression section (V) only present during the transport of grease - an otherwise blocked return connection opening into the feed line (14) from the compression section (V) is formed via an additional means (15, 16; 17 to 19; 20) so long as the head of the piston (3) is located in the compression section (V) during its movement in transport direction; and
- the closing force of the locking element (13) is adjusted so that it opens at the earliest when the head of the piston (3) reaches the transport section (F) and has shut it off from the compression section (V).

2. Device according to Claim 1, **characterised in that** the entrance (9b) of the transport line (12) into the transport section (F) is disposed in the control stop (9).

3. Device according to at least one of the preceding claims, **characterised in that** in the closed position the locking element (13) forms part of the face (9a) of the control stop (9), which borders the transport section (F).

4. Device according to at least one of the preceding claims, **characterised in that** the locking element (13) is mechanically opened as soon as the head (3c) of the piston (3) is located in the transport section (F) close to the control stop (9) during its movement in the transport direction (arrow 7).

5. Device according to at least one of the preceding claims, **characterised in that** the piston (3) can be driven in the transport direction (arrow 7) by means of a hydraulic fluid acting outside the cavity (4) and has a mechanical return means (8) active in the intake direction.

6. Device according to at least one of the preceding claims, **characterised in that** the additional means comprises a return locking element (16 or 18) flexibly held in the closed position, via which a return line (15 or 17, 19) opening into the cavity (4) is connected, at least intermittently, to the feed line (14).

7. Device according to at least one of the preceding claims, **characterised in that** the return line (15) is disposed outside the piston (3) and its entrance (15a) into the cavity (4) defines the end of the compression section (V) in the transport direction (arrow 7).

8. Device according to at least one Claims 1 to 6, **characterised in that** the return line (17, 19), together with the return locking element (18), is integrated into the piston (3).

9. Device according to Claim 8, **characterised in that** the return line comprises a longitudinal hole (17) opening into the piston head and a transverse hole (19) connected to this, which exits on the side on the piston periphery facing the entrance (14a) of the feed line.

10. Device according to at least one of the preceding Claims 1 to 5, **characterised in that** the piston (3) inside the cavity (4) has an external piston (20), which can move axially relative to the piston, its clearance of movement being fixed, on one side, by a holding element (3d) on the piston (3) and, on the other, by a boundary face (21a), at which the compression section (V) merges into the transport section (F) with a smaller diameter, wherein the compression force acting on the external piston (20) in the transport direction (arrow 7) is smaller than the driving force moving the piston (3) in this direction, and is adjusted such that the external piston (20) can assume its end position on the boundary face (21a) - against the action of the compressible medium entering the cavity (4).

11. Device according to Claim 10, **characterised in that** outside the cavity (4) the external piston (20) is acted on by the hydraulic fluid, which also drives the piston (3).

12. Device according to at least one of the preceding claims, **characterised in that** the locking element (13) or return locking element (16 or 18) is provided in the form of a spring-loaded non-return valve.

13. Device according to at least one of the preceding claims, **characterised in that** the locking element (13) directly forms part of the wall of the transport section (F) before the transport line (12) in such a way that the transport section (F) has, at least approximately, "zero" volume in the case where the piston (3) abuts against the control stop (9).

## Revendications

1. Dispositif d'alimentation en graisse pour des machines de chantier, en particulier pour des outils de percussion et outils de concassage actionnés de façon hydraulique, avec une unité de transport (1) qui est raccordée à un réservoir de stockage de graisse (22) et qui, dans un espace creux (4), présente un piston transporteur (3) actionné d'un mouvement alternatif rectiligne, une conduite d'alimentation (14) entrant dans l'espace creux (4) et reliée au réservoir de stockage de graisse (22), une conduite de transport (12) entrant dans l'espace creux (4) et comprenant un élément d'arrêt (13) tenu de manière flexible dans la position fermée ainsi qu'une butée réglable (9) qui limite la course du piston transporteur (3) dans la direction de son mouvement de transport (flèche 7), l'entrée (14a) de la conduite d'alimentation (14) dans l'espace creux (4) - vu dans le sens du mouvement de transport (flèche 7) - étant disposée devant celle de la conduite de transport (12) et étant fermée, au moins temporairement, par rapport à l'espace creux (4) au cas où le piston transporteur (3) se déplacerait au-delà de ladite entrée dans la direction de transport,
**caractérisé par** les caractéristiques suivantes :
- l'espace creux (4) présente - vu dans le sens du mouvement de transport (flèche 7) - derrière l'entrée (14a) de la conduite d'alimentation (14) dans celui-ci une section de compression (V) et, contigu à cela, une section de transport (F) ;
- déclenché par un niveau suffisamment élevé de pression dans la section de compression (V), qui n'est présent que lors du transport de graisse - une connexion de retour sinon bloquée débouchant de la section de compression (V) dans la conduite d'alimentation (14) est établie par un dispositif supplémentaire (15, 16 ; 17 à 19 ; 20) aussi longtemps que la tête du piston transporteur (3) se trouve, lors de son mouvement dans la direction de transport, dans la section de compression (V) ; et
- la force de fermeture de l'élément d'arrêt (13) est réglée de telle façon qu'il ouvre au plus tôt lorsque la tête du piston transporteur (3) a atteint la section de transport (F) et l'a fermée par rapport à la section de compression (V).

2. Dispositif selon la revendication 1, **caractérisé par le fait que** l'entrée (9b) de la conduite de transport (12) dans la section de transport (F) est disposée dans la butée réglable (9).

3. Dispositif selon l'une au moins des revendications précédentes, **caractérisé par le fait que**, dans la position fermée, l'élément d'arrêt (13) forme une partie de la face (9a) de la butée réglable (9), qui limite la section de transport (F).

4. Dispositif selon l'une au moins des revendications précédentes, **caractérisé par le fait que** l'élément d'arrêt (13) est ouvert mécaniquement dès que la tête (3c) du piston transporteur (3), lors de son mouvement dans la direction de transport (flèche 7), se trouve dans la section de transport (F) à proximité de la butée réglable (9).

5. Dispositif selon l'une au moins des revendications précédentes, **caractérisé par le fait que** le piston transporteur (3) peut être entraîné dans la direction de transport (flèche 7) au moyen d'un fluide sous pression agissant à l'extérieur de l'espace creux (4), et présente un moyen mécanique de rappel (8) efficace dans la direction d'aspiration.

6. Dispositif selon l'une au moins des revendications précédentes, **caractérisé par le fait que** le dispositif supplémentaire se compose d'un élément d'arrêt de retour (16 ou bien 18) qui est tenu de manière flexible dans la position fermée et par lequel une conduite de retour (15 ou bien 17, 19) entrant dans l'espace creux (4) est raccordée au moins temporairement à la conduite d'alimentation (14).

7. Dispositif selon l'une au moins des revendications précédentes, **caractérisé par le fait que** la conduite de retour (15) est disposée à l'extérieur du piston transporteur (3) et que son entrée (15a) dans l'espace creux (4) détermine le bout de la section de compression (V) dans la direction de transport (flèche 7).

8. Dispositif selon l'une au moins des revendications 1 à 6, **caractérisé par le fait que** la conduite de retour (17, 19), avec l'élément d'arrêt de retour (18), est intégrée dans le piston transporteur (3).

9. Dispositif selon la revendication 8, **caractérisé par le fait que** la conduite de retour se compose d'un perçage longitudinal (17) débouchant sur la tête du piston transporteur et d'un perçage transversal (19) qui est relié à ce premier et qui sort du côté sur la surface périphérique de piston, qui montre vers l'entrée (14a) de la conduite d'alimentation.

10. Dispositif selon l'une au moins des revendications précédentes 1 à 5, **caractérisé par le fait que** le piston transporteur (3) présente à l'intérieur de l'espace creux (4) un piston extérieur (20) qui, relatif au piston transporteur, peut se déplacer axialement et dont le jeu de mouvement est déterminé d'une part par un élément de retenue (3d) sur le piston transporteur (3) et d'autre part par une surface de limitation (21 a) sur laquelle la section de compression (V) entre dans la section de transport (F) présentant un diamètre plus petit, la force de compression agissant sur le piston extérieur (20) dans la direction de transport (flèche 7) étant plus faible que la force d'entraînement déplaçant le piston transporteur (3) dans cette direction et étant réglée de telle façon que le piston extérieur (20) peut prendre sa position extrême sur la surface de limitation (21a) - contre l'action du milieu compressible entré dans l'espace creux (4).

11. Dispositif selon la revendication 10, **caractérisé par le fait que**, à l'extérieur de l'espace creux (4), le piston extérieur (20) est soumis à l'action du fluide sous pression qui entraîne également le piston transporteur (3).

12. Dispositif selon l'une au moins des revendications précédentes, **caractérisé par le fait que** l'élément d'arrêt (13) ou bien l'élément d'arrêt de retour (16 ou bien 18) est réalisé en tant que clapet antiretour chargé par ressort.

13. Dispositif selon l'une au moins des revendications précédentes, **caractérisé par le fait que** l'élément d'arrêt (13) forme directement une partie de la paroi de la section de transport (F) devant la conduite de transport (12) de telle manière que la section de transport (F) présente au moins approximativement le volume « zéro » au cas où le piston transporteur (3) s'appuierait sur la butée réglable (9).
